# EUROPÄISCHE PATENTSCHRIFT

(11) **EP 0 975 501 B1**
(45) Veröffentlichungstag und Bekanntmachung des Hinweises auf die Patenterteilung: **03.09.2003**
(21) Anmeldenummer: 98924076.7
(22) Anmeldetag: 24.03.1998
(51) Int. Cl.: B60T 8/36

(54) **HYDRAULIKAGGREGAT FÜR HYDRAULISCHE STEUER- UND/ODER REGELVORRICHTUNG**
HYDRAULIC UNIT FOR A HYDRAULIC CONTROL DEVICE AND/OR REGULATING DEVICE
UNITE HYDRAULIQUE POUR DISPOSITIF HYDRAULIQUE DE COMMANDE ET/OU DE REGULATION

(30) Priorität: 24.03.1997 DE 19712209
(43) Veröffentlichungstag der Anmeldung: 02.02.2000
(73) Patentinhaber: Continental Teves AG & Co. oHG, 60488 Frankfurt am Main (DE)
(72) Erfinder: VOLZ, Peter, D-64291 Darmstadt (DE); CZARNETZKI, Edwin, D-65604 Elz (DE)
(86) Internationale Anmeldenummer: EP9801721
(87) Internationale Veröffentlichungsnummer: WO98042553

(56) Entgegenhaltungen:
- DE-A- 4 133 879
- DE-A- 4 320 005
- DE-A- 19 500 350
- DE-U- 9 413 844

## Beschreibung

Die Erfindung betrifft ein Hydraulikaggregat für eine hydraulische Steuer- und/oder Regelvorrichtung, insbesondere für blockierschutz- und/oder schlupfgeregelte Kraftfahrzeug-Bremsanlagen, nach dem Oberbegriff des Patentanspruchs 1.

Für den Einbau in Kraftfahrzeuge vorgesehene Hydraulikaggregate sind hinsichtlich ihrer Exposition gegenüber witterungs- und fahrwegbedingten Außeneinflüssen sehr häufig besonderen Gefährdungen ausgesetzt. Bei Kraftfahrzeugen bereiten in diesem Zusammenhang vor allem Salz- und Spritzwasser Probleme, da gegen derartige Einflüsse geschützte Einbauorte nicht beliebig zur Verfügung stehen bzw. aus Gründen einer zweckmäßigen Anordnung der Aggregate nicht gewählt werden können. Die Situation wird dadurch erschwert, daß mit Luft gefüllte Hohlräume in den verschiedenen Funktionselementen eines Hydraulikaggregates zum Zwecke der Gewährleistung eines störungsfreien Betriebs in aller Regel druckausgeglichen bzw. be- und entlüftbar sein müssen. Dies betrifft insbesondere auch rotierende elektrische Antriebselemente für Radialkolbenpumpen oder dergleichen, welche zwangsläufig von gasgefüllten Hohlräumen umgeben sind. Bereits geringe Druckdifferenzen oder Kondenswasseransammlungen können zu erheblichen Ablaufstörungen führen, so daß Maßnahmen zum Druckausgleich bzw. zur Be- und Entlüftung der Hohlräume im Allgemeinen unverzichtbar sind.

Im modernen Fahrzeugbau werden in der Regel kompakte Hydraulikaggregate verwendet, bei denen das mit einem topfförmigen Deckel versehene elektrische Antriebselement auf einen metallischen Ventilblock und nach außen hin dicht aufgesetzt ist. Die erforderliche Be- und Entlüftung der sich zwischen dem Gehäuse und dem Ventilblock befindenden Hohlräume erfolgt dabei meist über eine Druckausgleichsöffnung im Gehäusedeckel des elektrischen Antriebselements bzw. dem Motorentopf. Hierzu kann der Motorentopf beispielsweise mit einer Bohrung versehen sein, in die ein in die Bürstenplatte des Motors eingelassener Kanal mündet. Der Kanal seinerseits ist mit einer gasdurchlässigen Membran versehen, wodurch der Innenraum des Motors gegen das Eindringen von Wasser und Schmutz geschützt werden soll.

Aus der gattungsbildenden DE-A-4 320 005 ist bereits ein Hydraulikaggregat bekannt geworden, bei dem das elektrische Antriebselement über eine einen elektrischen Leiter umfassende, einteilige Anschlußkomponente an die Steuer- und Regelelektronik angeschlossen ist. Der elektrische Leiter ist hierzu mit einer Trägerplatte für die Schleifbürsten des Antriebselementes zusammengefaßt, wobei die Trägerplatte eine Dichtungsfunktion übernimmt. Auch die Anschlußkomponente ist in der Durchgangsbohrung des Ventilblocks abgedichtet, unabhängig davon, ob sie unmittelbar als Kabelstrang ausgeführt oder als Kunststoff-Formteil vom Material der Trägerplatte umspritzt ist.

Aus der DE-U-94 13 844 geht ein Hydraulikaggregat hervor, dessen für das Antriebelement vorgesehene elektrische Anschlußkomponente als einteiliger, mit isolierten Distanzstücken umschlossener Leiter ausgeführt ist, der durch ein Pumpengehäuse und einer sich zwischen dem Pumpengehäuse und einem anschließenden Elektronikgehäuse befindliche Dichtung hindurchgeführt ist.

Auch die DE-A-196 43 289 zeigt ein Hydraulikaggregat, dessen Antriebselement mit einer elektrischen Anschlußkomponente versehen ist die seitlich aus dem topfförmigen Gehäuse herausgeführt ist. Die Be- bzw. Entlüftung der Hohlräume erfolgt über die Welle des Antriebselementes, die eine Durchgangsbohrung aufweist, der sich in koaxialer Anordnung die Aufnahmebohrung für die Welle im Ventilblock mit einem Druckausgleichskanal anschließt.

In der DE 44 38 163 A1 wird eine Lösung des Belüftungsproblems vorgeschlagen, nach der das gesamte Hydraulikaggregat über ein gemeinsames Ventilationssystem be- und entlüftet wird. Anstatt einzelne Hohlräume im Aggregat separat über eine Mehrzahl von Belüftungsstellen zu be- bzw. entlüften, sollen mehrere, den verschiedenen Funktionselementen zugeordnete Hohlräume an das gemeinsame Ventilationssystem angeschlossen werden, wodurch die Be- und Entlüftung der Hohlräume zum Druckausgleich mit der Atmosphäre ausschließlich über eine mit wenigstens einem Druckausgleichskanal des Ventilationssystems in Verbindung stehende Belüftungsstelle ermöglicht wird. Der Fortfall zahlreicher aufwendig abzudichtender und mit Membranen zu sichernder Belüftungsstellen reduziert zunächst einmal den Bauaufwand und leistet auf diese Weise einen Beitrag zur Reduzierung der Produktionskosten. Wichtiger noch ist jedoch die Ausschaltung potentieller Störungsquellen, was bei gleichsam vertretbarem Wartungsaufwand sowohl der Zuverlässigkeit als auch der Lebensdauer des Gesamtaggregats zugute kommt. Ein Gesichtspunkt der in der DE 44 38 163 A1 offenbarten Lehre betrifft auch die Belüftung des elektrischen Antriebselements. Die Be- und Entlüftung der Hohlräume im Antriebselement findet hierbei über einen druckausgleichenden Verbindungspfad statt, der über die Spielpassung der Bürstenplatte auf der Antriebswelle und den Abständen zwischen den Lagerkugeln unter Durchführung durch den Exzenterraum bis zu einer zu diesem Zwecke im Bereich einer Lagerstelle des Antriebselements und an der Grenze des Ventilblockes zum Spulenraum angeordneten und als Belüftungsstelle bezeichneten Bohrung verläuft. Gemäß einer ebenfalls beschriebenen Ausführungsvariante werden auch die Hohlräume eines im Ventilblock angeordneten Druckspeicherelements über diesen Weg mit der Atmosphäre verbunden. Neben den bereits angesprochenen Vorteilen, die ein zentrales Ventilationssystem gegenüber der konventionellen Belüftung über eine Mehrzahl einzelner Verbindungsstellen zur Atmosphäre verspricht, dürfte es in den meisten Fällen als vorteilhaft anzusehen sein, wenn die Belüftung und der Druckausgleich der Hohlräume des elektrischen Antriebselements nicht über eine Bohrung im Motorentopf sondern an der entgegengesetzten Seite des Ventilblocks erfolgen. An dieser Seite des Ventilblocks ragen nämlich üblicherweise die Ventildome aus dem Ventilblock. Auf diese werden unter Bildung eines Spulenraumes die in das mit hochempfindlichen Elektronikkomponenten bestückte Reglergehäuse integrierten Magnetspulen unmittelbar aufgesetzt, so daß es naheliegt und auch der gängigen Praxis entspricht, das gesamte Aggregat im Fahrzeug so einzubauen, daß die besagte Seite des Ventilblocks sich an einer von Schmutz und Nässe weniger beeinträchtigten Stelle im Fahrzeug befindet. Der vorgeschlagene Entlüftungspfad durch den Ventilblock weist jedoch den Nachteil auf, daß sein Querschnitt an einigen Stellen, namentlich im Bereich der Motorbürsten und der Kugellagerung stark verengt ist. Der reine Druckausgleich wird hierdurch zwar kaum beeinträchtigt, eine der Ansammlung von Kondensflüssigkeit entgegenwirkende Ventilation und Durchlüftung der Hohlräume des elektrischen Antriebselements kann durch den vorgeschlagenen Lösungsweg jedoch weniger erreicht werden. Ein weiterer maßgeblicher Nachteil des vorgeschlagenen Entlüftungspfades ist darin zu sehen, daß die auszutauschenden Gase des elektrischen Antriebselements im Bereich des Exzenterraums und im Bereich der Kugellagerung zwangsläufig mit Flüssigkeiten in Kontakt geraten, bei denen die Gefahr gegeben ist, daß sie insbesondere bei starker Erhitzung des Aggregats kleinere Mengen in Form von Gas oder Dampf in den vorbeigeleiteten Gasstrom abgeben können. Dies kann dazu führen, daß Bestandteile der verwendeten Hydraulik- oder Schmierflüssigkeiten an anderer Stelle auskondensieren und Materialschädigungen und damit langfristig Betriebsstörungen verursachen. Es ist überdies grundsätzlich als nachteilhaft anzusehen, wenn Entlüftungspfade an Stellen starker selektiver Erhitzung, wie dies beispielsweise im Kontaktbereich mit der Hydraulikflüssigkeit der Fall ist, vorbeigeführt werden, wenn in den zu belüftenden Hohlräumen zumindest teilweise relativ niedrige und eine anschließende Kondensation begünstigende Temperaturen herrschen. Eine starke und damit Kondensationsprozesse fördernde Wärmeableitung findet insbesondere über den Motortopf des elektrischen Antriebselementes statt, da dieser in der Regel aus dünnwandigem Metall gefertigt ist und eine relativ große Oberfläche nach außen aufweist.

Es ist daher Aufgabe der Erfindung, ein Hydraulikaggregat der eingangs genannten Art zu schaffen, bei dem die Hohlräume des elektrischen Antriebselements auf eine sichere Weise und unter Durchführung einfacher wie kostengünstiger konstruktiver Maßnahmen druckausgeglichen bzw. be- und entlüftet sind.

Die Aufgabe wird erfindungsgemäß für ein Hydraulikaggregat der angegebenen Art durch die kennzeichnenden Merkmale des Patentanspruchs 1 gelöst.

Der Vorteil der Erfindung besteht darin, daß der Pfad für die Be- und Entlüftung der dem elektrischen Antriebselement zugeordneten Hohlräume einerseits innerhalb eines separaten Kanals verläuft und andererseits der Verlauf des Pfades auf eine neue und vorteilhafte Weise mit dem räumlichen Verlauf der elektrischen Anschlußkomponente kombiniert wird. Hieraus können sich, wie nachfolgend aufgezeigt werden soll, erhebliche funktionale Vorteile ergeben; in jedem Fall jedoch resulieren aus der Umsetzung der Erfindung die Gesamtkonstruktion eines gattungsgemäßen Hydraulikaggregrats vereinfachende und somit kostensenkende Effekte. Diese beruhen auf der zumindest abschnittsweise bifunktionalen Nutzung eines Versorgungs- bzw. Funktionspfades für das elektrische Antriebselement. Wenigstens auf eine Bohrung in dem das elektrische Antriebselement umgebenden Gehäuse bzw. im Ventilblock kann daher verzichtet werden. Die in der DE 44 38 163 A1 vorgeschlagene Lösung beruht zwar auch auf dem Gedanken, bereits vorhandene Pfade zur Be- und Entlüftung des elektrischen Antriebsaggregats zu nutzen; allerdings wird das konstruktive Problem nur verlagert, indem die erforderliche Bohrung unter Inkaufnahme der bereits beschriebenen Nachteile im Ventilblock vorgenommen wird. Gemäß der Erfindung verläuft der Kanal immer entlang eines Pfades, der, ob er nun durch den Ventilblock hindurch oder aber seitlich am Ventilblock vorbei, in jedem Falle auf kurzem Wege zur Steuer- und Regelelektronik führt.

Der gemeinsame Pfad wird dabei für technische Funktionen genutzt, die sich gegenseitig in keiner Weise beeinträchtigen. Der Querschnitt des Entlüftungskanals kann beispielsweise problemlos den Erfordernissen angepaßt werden, ohne daß Verengungen in Kauf genommen werden müssen. Der direkte Kontakt des den Kanal passierenden Gasstroms mit ''nassen'', nämlich Schmierstoffe oder Hydraulikflüssigkeit aufweisenden Bereichen wird durch die bauliche Maßnahme unterbunden, so daß folglich auch keine intern induzierten Verschmutzungen in den Hohlräumen des elektrischen Antriebsaggregats durch auskondensierte Flüssigkeiten oder dergleichen zu befürchten sind. Außerdem kann der räumliche Verlauf des Entlüftungskanals problemlos dergestalt angeordnet werden, daß durch starke Aufheizung und Abkühlung der Gasvolumen bedingte Kondensationsprozesse verhindert werden.

Vorzugsweise ist die elektrische Anschlußkomponente als eine aus zwei Steckerelementen zusammengesetzte und von dem Entlüftungskanal durchzogene Steckverbindung ausgeführt, so daß das elektrische Antriebselement bei der Montage oder Reparatur des Hydraulikaggregats ohne Vornahme von Lötarbeiten oder vergleichbar aufwendigen Installationsarbeiten auf den Ventilblock aufgesetzt werden kann. Wenn eines der beiden Steckerelemente fest mit der Boden- oder Bürstenplatte des elektrischen Antriebsaggregats verbunden ist, werden dessen Montage und Austauschbarkeit weiter vereinfacht. Demgemäß kann auch sein Gegenstück fest mit einem Teil des Reglergehäuses verbunden sein. Beispielsweise ist das entsprechende Steckerelement zusammen mit der Bürstenplatte bzw. dem Gehäuseunterteil des Reglergehäuses als einstückiges Kunststoff-Formteil ausgebildet, wodurch die Anzahl der erforderlichen Einzelteile in vorteilhafter Weise verringerbar ist. Die Steckerelemente selbst können beispielsweise durch Kunststoff-Umspritzung der elektrischen Leiter und eines als Entlüftungskanal dienenden Metall oder Kunststoffrohrs hergestellt werden. Eine andere Möglichkeit betrifft die Verschweißung oder Verklebung zweier entsprechend geformter Spritz- oder Strangguß-Halbprofile unter Ausbildung axial verlaufender Kanäle, von denen einer zum Zwecke der Entlüftung freigelassen ist.

Wenn der Kanal für die Entlüftung des elektrischen Antriebselements nicht an der Seite des Ventilblocks vorbei sondern durch den Ventilblock selbst hindurch verläuft, so ist eine Begrenzung des Kanals bereits durch die Bohrung im Ventilblock gegeben, so daß unter Umständen kein eigener Kanalkörper zur Entlüftung erforderlich ist. Die für derartige Fälle erforderliche Bohrung zur Durchführung der elektrischen Versorgungs- und Steuerleitungen muß lediglich einen Querschnitt aufweisen, der ausreicht, um auch die Be- und Entlüftung des elektrischen Antriebsaggregats zu gewährleisten.

Vorteilhafterweise mündet der Entlüftungskanal mit seinem der Druckausgleichsöffnung abgewandten Ende in einem der trockenen und saubere Bereiche des Hydraulikaggregats. Diesbezüglich wünschenswerte Verhältnisse herrschen vor allem innerhalb des Reglergehäuses, welches seinerseits über einen gasdurchlässigen Wandabschnitt mit der Atmosphäre verbunden sein kann. Ein derartiger Wandabschnitt kann eine gasdurchlässige Membran aus einem feuchtigkeits- und feststoffdichtem Material, beispielsweise aus einem Polytetrafluorethylen beinhalten.

Ein anderer relativ geschützter und prinzipiell ebenfalls geeigneter Raum befindet sich im Bereich des Austritts der Spulen für die Hydraulikventile aus dem Ventilblock, welcher im Allgemeinen vom Reglergehäuse abgedeckt ist. An jener Stelle ist es jedoch zweckmäßig, wenn der Entlüftungskanal bereits an der Einmündungsstelle in den Spulenraum mit einer Membran gegen Nässe und Schmutz abgedichtet ist.

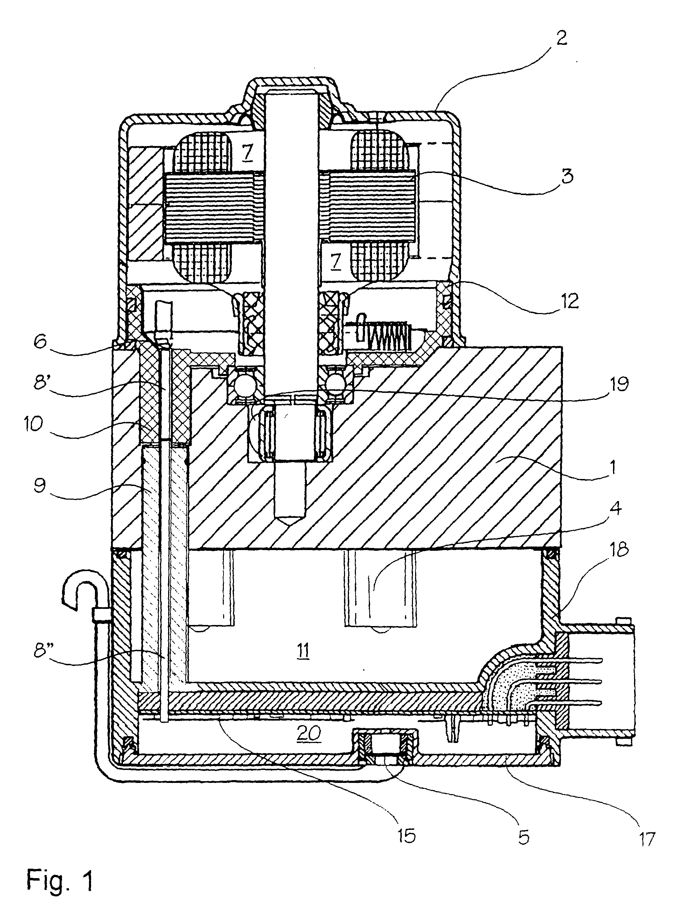

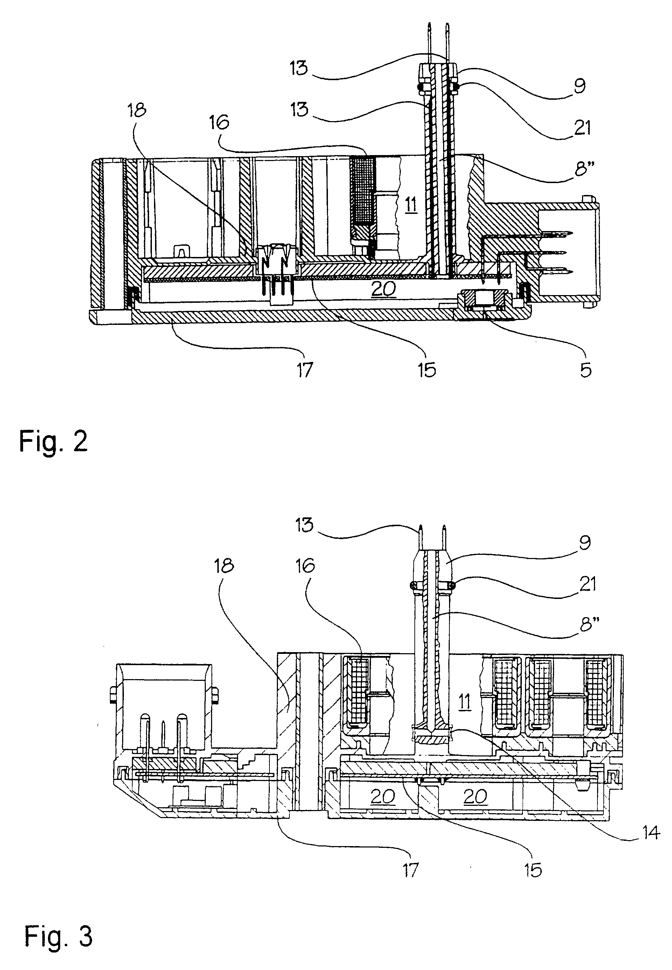

Die Erfindung wird nachstehend anhand dreier in der Zeichnung dargestellter Ausführungsbeispiele weiter erläutert, wobei Fig. 1 und 2 im Detail zwar voneinander abweichen, dem Funktionsprinzip nach jedoch die gleiche Ausführungsvariante betreffen. Es zeigen im einzelnen gemäß der Erfindung:
- Fig. 1 einen Schnitt durch ein Hydraulikaggregat, bei dem ein Be- und Entlüftungskanal 8', 8'' in den Innenraum 20 eines Reglergehäuses mündet;
- Fig. 2 einen Schnitt in unterschiedlichen Ebenen durch ein Reglergehäuse mit fest verbundenem Steckerelement, bei dem der Belüftungskanal 8 ebenfalls in den Innenraum des Reglergehäuses mündet;
- Fig. 3 einen Schnitt in unterschiedlichen Ebenen durch ein anderes Reglergehäuse mit ebenfalls fest verbundenem Steckerelement, bei dem der Belüftungskanal 8 in den Spulenraum mündet.

Das in Fig. 1 gezeigte Ausführungsbeispiel gibt ein Hydraulikaggregat mit einem Ventilblock 1 zur Lagerung des elektrischen Antriebselementes 3 und der Ventilelemente 4 sowie weiterer in der gezeigten Schnittebene nicht sichtbarer Funktionselemente wieder. Das elektrische Antriebselement 3 besteht aus einem Gleichstrommotor, dessen Rotor an einem Wellenende in einem Gehäusetopf 2 gelagert ist und dessen weiteres Lager in einer Sackbohrung des Ventilblocks 1 geführt ist. Das Lager führt die Welle des Antriebselementes in die Nähe des Wellenexzenterzapfens der zur Betätigung eines kolbenförmigen Druckerzeugerelementes 19 ein Nadellager aufweist. Im unteren Teil des elektrischen Antriebselements 3 ist eine den Motor zum Ventilblock 1 hin abgrenzende Bürstenplatte 12 angeordnet, durch die die Motorenwelle zu ihrem im Ventilblock angeordneten Lager durchgeführt ist. Unterhalb des Ventilblocks 1 ist unter Bildung eines Spulenraums 11 ein aus einem Reglergehäuseunterteil 18 und einem Reglergehäusedeckel 17 zusammengesetztes Reglergehäuse angeordnet, welches in seinem Innenraum 20 eine durch die abgebildete Leiterplatine 15 wiedergegebene Regel- und Steuerungseinrichtung beherbergt.

Die Hohlräume 7 sind über einen an seinem einen Ende eine Druckentlastungsöffnung 6 bildenden Kanal 8', 8'' mit dem Innenraum 20 des Reglergehäuses verbunden, welches seinerseits über eine PTFE-Membran 5 im Reglergehäusedeckel 17 und einen zusätzlichen Leitungsschlauch mit der Atmosphäre verbunden ist. Die Kanalabschnitte 8' bzw. 8'' verlaufen dabei innerhalb zweier durch eine Bohrung im Ventilblock geschobener Steckerelemente 10 und 9, welche an ihren nicht als Stecker ausgebildeten Enden jeweils fest mit der Bürstenplatte 12 bzw. dem Reglergehäuseunterteil 18 verbunden sind. In den Wandungen der Steckerelemente 10 und 9 verlaufen parallel zu den Kanalabschnitten 8' bzw. 8'' die in Fig. 1 nicht sichtbaren, da vom Kanal verdeckten, elektrischen Leiter zur Steuerung des elektrischen Antriebselements 3.

Der in Fig. 2 wiedergegebene Schnitt durch ein geringfügig modifiziertes Reglergehäuse gewährt eine detailliertere Sicht auf das männliche Steckerelement 9, das im gewählten Ausführungsbeispiel fest am Reglergehäuseunterteil 18 verankert ist und durch einfaches Umspritzen der elektrischen Leiter 13 und des Kanals 8'' hergestellt ist. Im oberen Bereich des Steckerelements 9 ist ein Klemmring 21 angeordnet, welcher einen festen und dichten Sitz des Steckerelements 9 in der vorgesehenen Bohrung des Ventilblocks gewährleistet.

Obgleich in den Fig. 1 und 2 der Übersichtlichkeit halber nicht wiedergegeben, versteht es sich, daß auch weitere von den übrigen Funktionselementen herangeführte Druckausgleichs- bzw. Be- und Entlüftungskanäle in den Reglergehäuseinnenraum führen können, so daß die Membran 5 auf diese Weise eine zentrale Verbindungsstelle für sämtliche druckauszugleichenden Hohlräume im Hydraulikaggregat mit der Atmosphäre verkörpert.

Anders als in den Fig. 1 und 2 endet bei dem in Fig. 3 gezeigten Reglergehäuse der Kanal 8'' vor dem Erreichen des Gehäuseinnenraums 20 und mündet statt dessen über ein T-Stück in den vom Reglergehäuseunterteil 18 und von dem nur als Begrenzungslinie gezeigten Ventilblock gebildeten Spulenraum 11, in dem die in Fig. 1 wiedergegebenen Ventildome 4 von den Spulenwicklungen 16 überstülpt sind. An den beiden Einmündungsstellen des Kanals 8'' in den Spulenraum 11 sind jeweils PTFE-Schutzmembranen 14 angeordnet. Von der Druckentlastungsöffnung 6 bis zu seiner Einmündungsstelle in den Spulenraum verläuft der Kanal parallel zu den wiederum nicht sichtbaren elektrischen Leitern, welche anschließend bis zur Leiterplatte 15 im Reglergehäuse 20 geführt sind. Das gezeigte Ausführungsbeispiel kann in den Fällen vorteilhaft sein, in denen die elektronischen Regel- und Steuerelemente aufgrund ihrer Empfindlichkeit unter allen Umständen von jeglichen Außeneinflüssen abgeschlossen werden sollen.

### Bezugszeichenliste:

- 1: Ventilblock
- 2: Deckel
- 3: elektrisches Antriebselement
- 4: Ventilelement
- 5: Membran
- 6: Druckausgleichsöffnung
- 7: Hohlraum
- 8: Kanal
- 9: Steckerelement
- 10: Steckerelement
- 11: Spulenraum
- 12: Bodenteil
- 13: elektrischer Leiter
- 14: Membran
- 15: Leiterplatine
- 16: Spulenwicklung
- 17: Reglergehäusedeckel
- 18: Reglergehäuseunterteil
- 19: Druckerzeugerelement
- 20: Reglergehäuseinnenraum
- 21: Klemmring

## Patentansprüche

1. Hydraulikaggregat für eine hydraulische Steuer- und/oder Regelvorrichtung, insbesondere für blockierschutz- und/ oder schlupfgeregelte Kraftfahrzeug-Bremsanlagen, mit einer in einem Reglergehäuse angeordneten Steuer- und Regelelektronik sowie mit einem mit dem Reglergehäuse verbundenen Ventilblock (1), an dem neben anderen über Druckmittelkanäle miteinander verbundenen Funktionselementen, wie z.B. Speicher-, Ventil- und Druckerzeugerelementen, wenigstens ein elektrisches Antriebselement (3) für ein oder mehrere Druckerzeugerelemente (19) angeordnet ist, wobei das elektrische Antriebselement (3) über eine elektrische Leiter (13) umfassende Anschlußkomponente an die Steuer- und Regelelektronik angeschlossen ist, **dadurch gekennzeichnet, daß** dem elektrischen Antriebselement (3) zugeordnete Hohlräume über eine Druckausgleichsöffnung (6) be- bzw. entlüftbar sind, und daß für die Be- bzw. Entlüftung der dem elektrischen Antriebselement (3) zugeordneten Hohlräume (7) ein in die Druckausgleichsöffnung (6) mündender Kanal (8', 8'') vorgesehen ist, durch den oder in dessen Wandung wenigstens im sich der Druckausgleichsöffnung (6) anschließenden Abschnitt die elektrischen Leiter (13) der Anschlußkomponente verlaufen, die eine zwei Steckerelemente(9, 10) umfassende und von dem Kanal (8', 8'') durchzogene Steckverbindung aufweist.

2. Hydraulikaggregat nach Anspruch 1, **dadurch gekennzeichnet, daß** das Steckerelement (10) mit einer Boden- oder Bürstenplatte (12) für das elektrische Antriebselement (3) fest verbunden ist.

3. Hydraulikaggregat nach Anspruch 1, **dadurch gekennzeichnet, daß** das Steckerelement (9) mit einem Reglergehäuseunterteil (18) fest verbunden ist.

4. Hydraulikaggregat nach Anspruch 1, **dadurch gekennzeichnet, daß** der Kanal (8', 8'') innerhalb eines oder mehrerer Spritzgußteile verläuft, in die die Leiter (13) der elektrischen Anschlußkomponente integriert sind.

5. Hydraulikaggregat nach einem der Ansprüche 1 und 4, **dadurch gekennzeichnet, daß** der Kanal (8', 8'') durch den Ventilblock (1) hindurch verläuft.

6. Hydraulikaggregat nach einem der Ansprüche 1, 4 und 5, **dadurch gekennzeichnet, daß** der Kanal (8'') mit seinem freien Ende in den Innenraum (20) des Reglergehäuses mündet.

7. Hydraulikaggregat nach Anspruch 6, **dadurch gekennzeichnet, daß** das Reglergehäuse über wenigstens einen gasdurchlässigen Wandabschnitt oder eine Membran (5) mit der Außenluft verbunden ist.

8. Hydraulikaggregat nach einem der Ansprüche 1, 4 und 5, **dadurch gekennzeichnet, daß** der Kanal (8',8") mit seinem freien Ende in einen von dem Ventilblock (1) und dem Reglergehäuse (17, 18) begrenzten Spulenraum (11) mündet.

9. Hydraulikaggregat nach Anspruch 8, **dadurch gekennzeichnet, daß** der Kanal (8',8") mit wenigstens einer gasdurchlässigen Membran (14) zum Spulenraum (11) hin abgedichtet ist.

10. Hydraulikaggregat nach einem der Ansprüche 7 oder 9, **dadurch gekennzeichnet, daß** die Membran (5,14) aus einem Polytetrafluorethylen bestehen.

## Claims

1. Hydraulic assembly for a hydraulic controlling and/or regulating device, in particular for anti-lock and/or slip-controlled brake systems for automotive vehicles, including a controlling and regulating electronics arranged in a controller housing as well as a valve block (1) connected to the controller housing, whereon at least one electric driving element (3) for one or more pressure-generating elements (19) is arranged beside other function elements such as accumulator, valve and pressure-generating elements interconnected by way of pressure fluid channels, wherein said electric driving element (3) is connected to the controlling and regulating electronics by way of a connecting component comprising electric conductors (13),
**characterized in that** hollow spaces associated with the electric driving element (3) can be ventilated or bled by way of a pressure compensating opening (6), and **in that** for ventilation or bleeding of the hollow spaces (7) associated with the electric drive element (3) there is provision of a channel (8', 8'') that opens into the pressure compensating opening (6), through which channel or in whose wall the electric conductors (13) of the connecting component extend at least in the portion adjacent to the pressure compensating opening (6), said connecting component including a plug coupling that comprises two plug elements (9, 10) and is penetrated by the channel (8', 8'').

2. Hydraulic assembly as claimed in claim 1,
**characterized in that** the plug element (10) is rigidly connected to a bottom or brush plate (12) for the electric driving element (3).

3. Hydraulic assembly as claimed in claim 1,
**characterized in that** the plug element (9) is rigidly connected to a bottom part of the controller housing (18).

4. Hydraulic assembly as claimed in claim 1,
**characterized in that** the channel (8', 8'') extends within one or more injection moulded parts into which the conductors (13) of the electric connecting component are integrated.

5. Hydraulic assembly as claimed in any one of claims 1 and 4,
**characterized in that** the channel (8', 8'') extends through the valve block (1).

6. Hydraulic assembly as claimed in any one of claims 1, 4 and 5,
**characterized in that** the channel (8'') with its free end opens into the interior (20) of the controller housing.

7. Hydraulic assembly as claimed in claim 6,
**characterized in that** the controller housing is connected to the ambient air by way of at least one gas-permeable wall portion or a membrane (5).

8. Hydraulic assembly as claimed in any one of claims 1, 4 and 5,
**characterized in that** the channel (8', 8'') with its free end opens into a coil chamber (11) defined by the valve block (1) and the controller housing (17, 18).

9. Hydraulic assembly as claimed in claim 8,
**characterized in that** the channel (8', 8'') is sealed towards the coil chamber (11) by at least one gas-permeable membrane (14).

10. Hydraulic assembly as claimed in any one of claims 7 or 9,
**characterized in that** the membranes (5, 14) are made of polytetrafluor ethylene.

## Revendications

1. Unité hydraulique pour un dispositif hydraulique de commande et/ou de régulation, notamment pour des installations de freinage de véhicule automobile à dispositif antiblocage et/ou à réglage de patinage, comportant une électronique de commande et de régulation disposée dans un boîtier de régulateur ainsi qu'un bloc de soupape (1) relié au boîtier de régulateur, sur lequel est disposé, en plus d'autres éléments fonctionnels reliés entre eux par des canaux d'un milieu comprimé, tels que par exemple des éléments d'accumulation, de soupape et producteurs de pression, au moins un élément d'entraînement électrique (3) pour un ou plusieurs éléments producteurs de pression (19), dans lequel l'élément d'entraînement électrique (3) est relié à l'électronique de commande et de régulation par un conducteur électrique (13) enveloppant un composant de jonction, **caractérisée en ce que** des espaces creux associés à l'élément d'entraînement électrique (3) peuvent être aérés ou ventilés par une ouverture d'équilibrage de pression (6), et **en ce qu'**il est prévu, pour l'aération ou la ventilation des espaces creux (7) associés à l'élément d'entraînement électrique (3), un canal (8', 8") débouchant dans l'ouverture d'équilibrage de pression (6), par lequel ou dans la paroi duquel, au moins dans leur section se raccordant à l'ouverture d'équilibrage de pression (6), s'étendent les conducteurs électriques (13) du composant de jonction, lequel comprend une fiche de raccordement comportant deux éléments enfichables (9, 10) et traversée par le canal (8', 8").

2. Unité hydraulique selon la revendication 1, **caractérisée en ce que** l'élément enfichable (10) est relié à l'élément d'entraînement électrique (3) par une plaque de fond ou de balais (12).

3. Unité hydraulique selon la revendication 1, **caractérisée en ce que** l'élément enfichable (9) est relié rigidement à une partie inférieure (18) du boîtier du régulateur.

4. Unité hydraulique selon la revendication 1, **caractérisée en ce que** le canal (8', 8") s'étend à l'intérieur d'une ou de plusieurs parties moulées par injection, dans lesquelles sont intégrés les conducteurs (13) du composant de jonction électrique.

5. Unité hydraulique selon l'une des revendications 1 et 4, **caractérisée en ce que** le canal (8', 8") s'étend à travers le bloc de soupape (1).

6. Unité hydraulique selon l'une des revendications 1, 4 et 5, **caractérisée en ce que** le canal (8") débouche par son extrémité libre dans l'espace intérieur (20) du boîtier du régulateur.

7. Unité hydraulique selon la revendication 6, **caractérisée en ce que** le boîtier du régulateur est relié à l'air extérieur par au moins une section de paroi perméable aux gaz ou par une membrane (5).

8. Unité hydraulique selon l'une des revendications 1, 4 et 5, **caractérisée en ce que** le canal (8', 8") débouche, par son extrémité libre, dans un espace de bobines (11) limité par le bloc de soupape (1) et par le boîtier du régulateur (17, 18).

9. Unité hydraulique selon la revendication 8, **caractérisée en ce que** le canal (8', 8") est rendu étanche, vis-à-vis de l'espace des bobines (11), par au moins une membrane (14) perméable aux gaz.

10. Unité hydraulique selon l'une des revendications 7 ou 9, **caractérisée en ce que** les membranes (5,14) sont constituées d'un polytétrafluoréthylène.
